# EUROPEAN PATENT APPLICATION

(11) **EP 4 541 865 A1**
(43) Date of publication of application: **23.04.2025**
(21) Application number: 23823743.2
(22) Date of filing: 02.06.2023
(51) Int. Cl.: C09K 3/10

(54) **SEAL MATERIAL**

(30) Priority: 17.06.2022 JP 2022098436
(71) Applicant: NITTO DENKO CORPORATION, Ibaraki-shi Osaka 567-8680 (JP)
(72) Inventor: KAMAYA Yusuke, Ibaraki-shi, Osaka 567-8680 (JP); UKEI Hiroichi, Ibaraki-shi, Osaka 567-8680 (JP); IWASE Takayuki, Ibaraki-shi, Osaka 567-8680 (JP); SUZUKI Hideyuki, Ibaraki-shi, Osaka 567-8680 (JP)
(74) Representative: Müller-Boré & Partner Patentanwälte PartG mbB
(86) International application number: PCT/JP2023/020693
(87) International publication number: WO 2023/243450

(57) **Abstract**

A sealing member 1a includes a first face 11 and a second face 12. The second face 12 faces in a direction opposite to the direction in which the first face 11 faces. In the sealing member 1a, requirements F1 ≥ F2, T > F2, F1 ≥ 0.3 N/20 mm, and F2 ≥ 0.3 N/20 mm are satisfied. F1 is the 90° peel adhesion [N/20 mm] as measured in accordance with JIS Z 0237:2022 by peeling off the first face 11. F2 is the 90° peel adhesion [N/20 mm] as measured in accordance with JIS Z 0237:2022 by peeling off the second face 12. T is the tear strength [N/20 mm] as measured in accordance with JIS K 6252-1:2015 by using an angle test piece without a nick, and the test piece is formed from a portion of the sealing member 1a away from both the first face 12 and the second face 12.

## Description

### TECHNICAL FIELD

The present invention relates to a sealing member.

### BACKGROUND ART

Sealing members that can fill gaps to exhibit watertight performance have been conventionally known.

For example, Patent Literature 1 describes a watertight sealing member in which a layer of a given pressure-sensitive adhesive composition is on at least one face of a foamed structure having closed cells. The layer contains a polymer having a given polycarbonate structure.

In Patent Literature 1, a watertight test is conducted on a watertight sealing member specimen sandwiched between two acrylic sheets.

### CITATION LIST

### Patent Literature

Patent Literature 1: JP H10-77463 A

### SUMMARY OF INVENTION

### Technical Problem

The description in Patent Literature 1 does not envision adhering a sealing member while pressing the sealing member using a member such as a roller, and the technique described in Patent Literature 1 has room for reexamination in terms of such adhering and watertight performance.

In view of this, the present invention provides a sealing member that is advantageous in terms of adhering a sealing member while pressing the sealing member using a member such as a roller and in terms of watertight performance.

### Solution to Problem

The present invention provides a sealing member including:
a first face; and
a second face facing in a direction opposite to a direction in which the first face faces, wherein
requirements F1 ≥ F2, T > F2, F1 ≥ 0.3 N/20 mm, and F2 ≥ 0.3 N/20 mm are satisfied,
in the requirements, F1 is a 90° peel adhesion [N/20 mm] as measured in accordance with Japanese Industrial Standards (JIS) Z 0237:2022 by peeling off the first face, and F2 is a 90° peel adhesion [N/20 mm] as measured in accordance with JIS Z 0237:2022 by peeling off the second face, and
in the requirements, T is a tear strength [N/20 mm] as measured in accordance with JIS K 6252-1:2015 by using an angle test piece without a nick, the test piece being formed from a portion of the sealing member away from both the first face and the second face.

### Advantageous Effects of Invention

The above sealing member is advantageous in terms of adhering a sealing member while pressing the sealing member using a member such as a roller and in terms of watertight performance.

### BRIEF DESCRIPTION OF DRAWINGS

FIG. 1 is a cross-sectional view schematically showing an example of a sealing member according to the present invention.
FIG. 2 is a cross-sectional view showing an example of a sealing structure provided using the sealing member shown in FIG. 1.
FIG. 3A is a cross-sectional view schematically showing an example of a method for adhering the sealing member shown in FIG. 1.
FIG. 3B is a cross-sectional view schematically showing an example of a method for adhering a sealing member according to a reference example.
FIG. 4 is a view schematically showing another example of the method for adhering the sealing member according to the present invention.

### DESCRIPTION OF EMBODIMENTS

Embodiments of the present invention will be described with reference to the drawings. The present invention is not limited to the following embodiments.

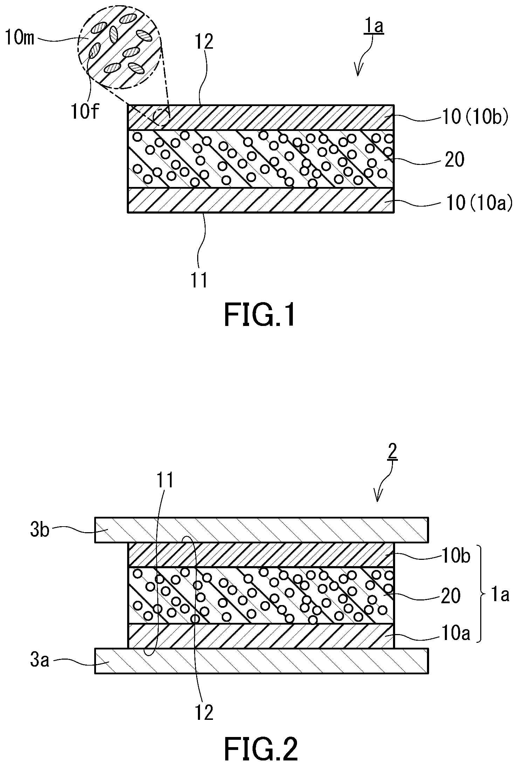

As shown in FIG. 1, a sealing member 1a includes a first face 11 and a second face 12. The second face 12 faces in a direction opposite to the direction in which the first face 11 faces. In the sealing member 1a, requirements F1 ≥ F2, T > F2, F1 ≥ 0.3 N/20 mm, and F2 ≥ 0.3 N/20 mm are satisfied. F1 is the 90° peel adhesion [N/20 mm] as measured in accordance with JIS Z 0237:2022 by peeling off the first face 11. F2 is the 90° peel adhesion [N/20 mm] as measured in accordance with JIS Z 0237:2022 by peeling off the second face 12. T is the tear strength [N/20 mm] as measured in accordance with JIS K 6252-1:2015 by using an angle test piece without a nick, and the test piece is formed from a portion of the sealing member 1a away from both the first face 12 and the second face 12. The angle test piece without a nick for measuring the tear strength T may have dimensions different from the dimensions of the angle test piece described in JIS K 6252-1:2015, as long as the angle test piece for measuring the tear strength T has a shape similar to the shape of the angle test piece described in JIS K 6252-1:2015.

As shown in FIG. 2, a sealing structure 2 can be provided using the sealing member 1a. The sealing structure 2 includes the sealing member 1a, a first member 3a, and a second member 3b. In the sealing structure 2, the sealing member 1a is disposed between the first member 3a and the second member 3b and fills the gap between the first member 3a and the second member 3b. The first face 11 is in contact with the first member 3a. The second face 12 is in contact with the second member 3b. Since the requirements F1 ≥ 0.3 N/20 mm and F2 ≥ 0.3 N/20 mm are satisfied in the sealing member 1a, the sealing structure 2 is likely to exhibit high sealing performance between the first face 11 and the first member 3a and is likely to exhibit high sealing performance between the second face 12 and the second member 3b. Therefore, even when the sealing structure 2 is used in an environment where the sealing structure 2 comes into contact with water, the sealing structure 2 is likely to exhibit high watertight performance.

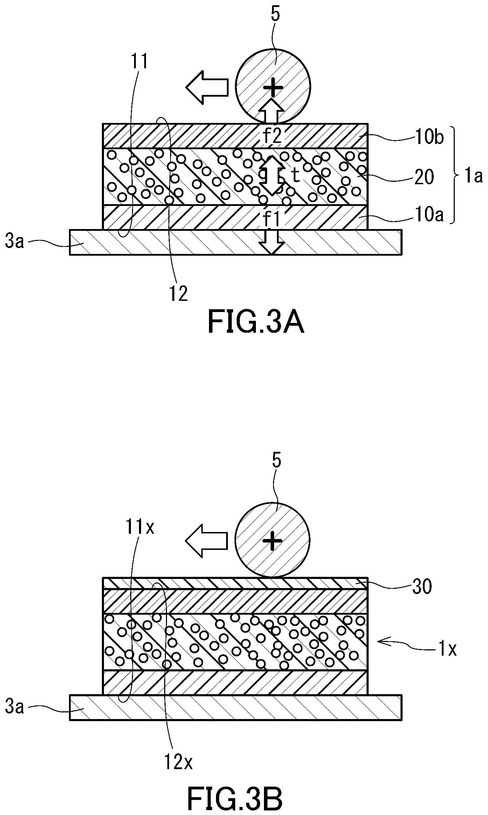

To obtain the sealing structure 2, the sealing member 1a is adhered to the first member 3a, for example. As shown in FIG. 3A, the sealing member 1a can be adhered to the first member 3a using a roller 5. In a state where the sealing member 1a is placed on the first member 3a with the first face 11 in contact with the first member 3a, the roller 5 can be rolled on the second face 12 while being brought into contact with the second face 12, pressing the sealing member 1a against the first member 3a using the roller 5 to adhere the sealing member 1a to the first member 3a. Conventionally, attempts have rarely been made to adhere a sealing member having a given adhesion while pressing the surface of the sealing member using a member such as a roller. This is because pressing a roller against the surface of a sealing member having a given adhesion and rolling the roller simultaneously is not anticipated to be an easy task due to the possibility of the sealing member adhering to the roller. The present inventors have conducted extensive studies in order to achieve such adhering of a sealing member. After much trial and error, the present inventors have found out that, in order to achieve such adhering, it is crucial for a sealing member to satisfy a given relationship between a given 90° peel adhesion and a given tear strength.

As shown in FIG. 3A, as the roller 5 is rolled, a force f1 is generated between the first face 11 and the first member 3a and a force f2 is generated between the second face 12 and the roller 5. In addition, in the central portion of the sealing member 1a, away from both the first face 11 and the second face 12, a force t is generated toward both the first face 11 and the second face 12. Since the requirements F1 ≥ F2 and T > F2 are satisfied in the sealing member 1a, these forces f1, f2, and t are adjusted to achieve a desired balance and the sealing member 1a can be adhered to the first member 3a using the roller 5.

The force f1 is considered to be associated with the 90° peel adhesion F1, and the force f2 is considered to be associated with the 90° peel adhesion F2. In addition, the magnitude of the force t that can prevent tearing of the sealing member 1a is considered to be associated with the tear strength T. Satisfying the requirement F1 ≥ F2 prevents the force f2 from becoming excessively large relative to the force f1. This prevents the first face 11 from peeling off from the first member 3a as the roller 5 is rolled, enabling the sealing member 1a to be adhered to the first member 3a. In addition, satisfying the requirement T > F2 prevents the occurrence of tearing in the central portion of the sealing member 1a due to the force t generated by the rolling of the roller 5. Therefore, the sealing member 1a can exhibit high watertight performance even when adhered to the first member 3a using the roller 5. Note that the 90° peel adhesion as measured in accordance with JIS Z 0237:2022 and the tear strength as measured in accordance with JIS K 6252-1:2015 are not inherently comparable to each other. Therefore, it is generally not envisioned to design a sealing member through a comprehensive consideration of the 90° peel adhesions F1 and F2 as well as the tear strength T.

FIG. 3B schematically shows an example of a method for adhering a sealing member 1x according to a reference example. The sealing member 1x includes a release liner 30, and the release liner 30 is disposed to cover a second face 12x. As shown in FIG. 3B, in this adhering method, the roller 5 is rolled on the release liner 30 while being brought into contact with the release liner 30, pressing the sealing member 1x against the first member 3a using the roller 5. According to this adhering method, after the sealing member 1x is adhered to the first member 3a, the release liner 30 is required to be peeled off to expose the second face 12x. This is likely to complicate the task for sealing between the first member 3a and the second member 3b. In contrast, with the sealing member 1a, such a task of peeling off a release liner can be eliminated, enabling the sealing structure 2 to be obtained through a simple task.

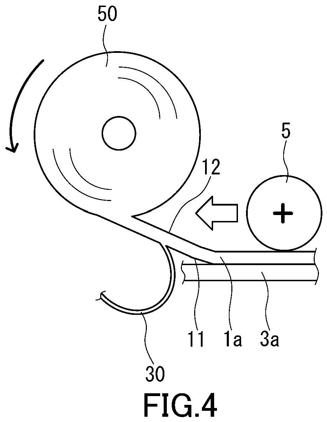

The sealing member 1a may be provided together with the release liner 30 that can be peeled off from the first face 11 of the sealing member 1a. In this case, the release liner 30 is peeled off from the first face 11 before the sealing member 1a is adhered to the first member 3a using the roller 5, for example. As shown in FIG. 4, the sealing member 1a and the release liner 30 can be provided, for example, as a wound body 50. From the wound body 50, the sealing member 1a is unwound while the release liner 30 is being peeled off from the first face 11 of the sealing member 1a, and the sealing member 1a is placed on the first member 3a. The roller 5 is then rolled on the second face 12, adhering the sealing member 1a to the first member 3a.

The 90° peel adhesions F1 and F2 are each desirably 0.5 N/20 mm or more, more desirably 0.8 N/20 mm or more, and even more desirably 1.0 N/20 mm or more. The 90° peel adhesions F1 and F2 each may be 2 N/20 mm or more, 3 N/20 mm or more, 4 N/20 mm or more, or 5 N/20 mm or more. The 90° peel adhesions F1 and F2 are each, for example, 50 N/20 mm or less. In this case, many options for the materials of the sealing member 1a that satisfy the requirement T > F2 are available, making the manufacturing of the sealing member 1a less susceptible to the influences of supply chains. The 90° peel adhesions F1 and F2 are each desirably 35 N/20 mm or less, more desirably 20 N/20 mm or less, and even more desirably 10 N/20 mm or less.

The 90° peel adhesion F1 may be equal to the 90° peel adhesion F2 or may be greater than the 90° peel adhesion F2. The ratio of the 90° peel adhesion F1 to the 90° peel adhesion F2, F1/F2, is not limited to a particular value as long as the above requirement is satisfied. The ratio F1/F2 is, for example, 10 or less, and may be 5 or less, 3 or less, or 2 or less.

The tear strength T is not limited to a particular value as long as the requirement T > F2 is satisfied. The tear strength T is, for example, 5 N/20 mm or more. In this case, for example, even if vibration or the like in the sealing structure 2 varies the distance between the first member 3a and the second member 3b, tearing is less likely to occur inside the sealing member 1a and the watertight performance of the sealing structure 2 is likely to be maintained for a long period of time. The tear strength T is desirably 10 N/20 mm or more, and more desirably 30 N/20 mm or more.

The tear strength T is, for example, 70 N/20 mm or less. The tear strength T may be 60 N/20 mm or less, or 50 N/20 mm or less.

In the sealing member 1a, 90° peel adhesions F1_{1day} and F2_{1day} are not limited to particular values. F1_{1day} is the 90° peel adhesion as measured in accordance with JIS Z 0237:2022 by adhering the sealing member 1a to a test panel with the first face 11 in contact with the test panel and peeling off the sealing member 1a one day after the adhering. F2_{1day} is the 90° peel adhesion as measured in accordance with JIS Z 0237:2022 by adhering the sealing member 1a to a test panel with the second face 12 in contact with the test panel and peeling off the sealing member 1a one day after the adhering. In the sealing member 1a, the 90° peel adhesions F1_{1day} and F2_{1day} are each, for example, 5 N/20 mm or more. In this case, for example, the sealing structure 2 is likely to exhibit high watertight performance only one day after the sealing structure 2 is obtained using the sealing member 1a. Consequently, even with a short period from the completion of the sealing structure 2 to its practical use, high watertight performance is still exhibited. Therefore, the sealing member 1a has high added value.

The 90° peel adhesions F1_{1day} and F2_{1day} are each desirably 10 N/20 mm or more, and more desirably 15 N/20 mm or more. The 90° peel adhesions F1_{1day} and F2_{1day} are each, for example, 120 N/20 mm or less and each may be 100 N/20 mm or less.

A tack value V_{Tack} of the second face 12 is not limited to a particular value. The tack value V_{Tack} is, for example, 20 N/cm² or less. The tack value V_{Tack} is determined by a method in which, when a 5 mm diameter circular end face of a probe is pressed against the second face 12 with a force of 0.25 N for 1 second and then is separated from the second face 12 at a speed of 100 mm/min, the maximum value of the force acting on the probe while the probe is being separated from the second face 12 is divided by the area of the end face of the probe. The tack value V_{Tack} can be measured, for example, using a measuring device and a probe which are described in Examples. Owing to the tack value V_{Tack} being 20 N/cm² or less, when the sealing member 1a is adhered using the roller 5, the roller 5 can easily detach from the sealing member 1a as the roller 5 is rolled, making the task of adhering the sealing member 1a likely to be easy.

The tack value V_{Tack} is desirably 18 N/cm² or less, more desirably 16 N/cm² or less, and even more desirably 14 N/cm² or less. The tack value V_{Tack} is, for example, 0.1 N/cm² or more.

The distance between the first face 11 and the second face 12 is not limited to a particular value. The distance may be, for example, 1 mm or more and 50 mm or less, 1 mm or more and 40 mm or less, 1 mm or more and 30 mm or less, 1 mm or more and 20 mm or less, or 2 mm or more and 20 mm or less.

In the sealing member 1a, the modulus of elasticity in tension of either a layer including the second face 12 or a portion having a thickness of 200 µm from the second face 12 is not limited to a particular value. The modulus of elasticity in tension is, for example, 2 MPa or more. In this case, when the sealing member 1a is adhered using the roller 5, the roller 5 can easily detach from the sealing member 1a as the roller 5 is rolled, making the task of adhering the sealing member 1a likely to be easy. The modulus of elasticity in tension is desirably 2.5 MPa or more, and more desirably 3 MPa or more. The modulus of elasticity in tension is, for example, 50 MPa or less, desirably 40 MPa or less, more desirably 30 MPa or less, and even more desirably 25 MPa or less. This modulus of elasticity in tension can be measured, for example, in accordance with JIS K 6251:2017 by the method described in Examples. In the sealing member 1a, a test piece may be prepared by peeling off a layer including the second face 12 to measure the modulus of elasticity in tension of the layer. This modulus of elasticity in tension may be, for example, less than 2 MPa, 1.5 MPa or less, or 1.0 MPa or less. In this case, the modulus of elasticity in tension is, for example, 0.5 MPa or more.

As shown in FIG. 1, the sealing member 1a includes, for example, a foam 20. In this case, in the sealing structure 2, the sealing member 1a can easily undergo compressive deformation to fit the gap between the first member 3a and the second member 3b, making the sealing structure 2 likely to have high watertight performance.

The structure of the foam 20 is not limited to a particular structure. For example, the foam 20 has a closed-cell structure. In this case, the liquid tightness inside the foam 20 is high and the sealing structure 2 is likely to exhibit high watertight performance. In addition, the tear strength T is likely to increase and adhering using the roller 5 can be more easily performed.

For example, the foam 20 may have a semi-open/semi-closed-cell structure. In this case, the foam 20 includes open cells before compressive deformation, and, for example, when the foam 20 undergoes compressive deformation to generate a compressive strain of 50% or more, the structure of the foam 20 changes to a structure similar to a closed-cell structure due to blockage of the open-cell portions.

The material of the foam 20 is not limited to a particular material. The foam 20 is, for example, a rubber foam. The rubber foam is obtained by foaming a rubber composition containing, for example, rubber, a foaming agent, and a cross-linking agent.

The rubber may be, for example, an olefin-based elastomer, a styrene-based elastomer, a butyl-based elastomer, a vinyl chloride-based elastomer, or natural rubber. Examples of olefin-based elastomers include ethylene-propylene rubber (EPM) and ethylene-propylene-diene rubber (EPDM). Examples of styrene-based elastomers include styrene-butadiene rubber (SBR), styrene-butadiene-styrene rubber (SBS), styrene-isoprene-styrene rubber (SIS), styrene-ethylene-butadiene rubber, styrene-ethylene-butylene-styrene rubber (SEBS), styrene-isobutylene-styrene block rubber (SIBS), and styrene-isoprene-propylene-styrene rubber. Examples of butyl-based elastomers include butyl rubber, polyisobutylene rubber, polybutene, polyisoprene rubber, and nitrile butadiene rubber (NBR). Examples of vinyl chloride-based elastomers include chloroprene rubber and chlorosulfonated polyethylene rubber.

The rubber is desirably an olefin-based elastomer, and more desirably EPDM. In this case, even when the compressive strain of the foam 20 in the sealing structure 2 is small, the sealing structure 2 is likely to exhibit high watertight performance.

The EPDM is a rubber obtained by the copolymerization of ethylene, propylene, and a diene. By copolymerizing ethylene and propylene with a diene additionally, it is possible to introduce an unsaturated bond, enabling cross-linking with a cross-linking agent.

Examples of the diene include 5-ethylidene-2-norbornene, 1,4-hexadiene, and dicyclopentadiene. These dienes may be used alone, or a combination of two or more of these dienes may be used. In the case where the diene includes dicyclopentadiene, the degree of cross-linking can be improved.

The EPDM desirably has long-chain branching. A method for introducing a long branched chain into the EPDM is not limited to a particular method, and a known method is employed. In the case where the EPDM has long-chain branching, the rubber composition can be foamed well.

The content of the diene in the EPDM (diene content) is, for example, 1 mass% or more, desirably 2 mass% or more, and more desirably 3 mass% or more. The diene content is, for example, 20 mass% or less, and desirably 15 mass% or less. In this case, the rubber foam is less susceptible to the occurrence of surface shrinkage, and the rubber foam is less susceptible to the occurrence of a crack.

The foaming agent may be an organic foaming agent or an inorganic foaming agent.

Examples of the organic foaming agent include an azo-based foaming agent, an N-nitroso-based foaming agent, a hydrazide-based foaming agent, a semicarbazide-based foaming agent, a fluorinated alkane-based foaming agent, a triazole-based foaming agent, and other known organic foaming agents. Examples of azo-based foaming agents include azodicarbonamide (ADCA), barium azodicarboxylate, azobisisobutyronitrile (AIBN), azocyclohexylnitrile, and azodiaminobenzene. Examples of N-nitroso-based foaming agents include N,N'-dinitrosopentamethylenetetramine (DTP), N,N'-dimethyl-N,N'-dinitrosoterephthalamide**,** and trinitrosotrimethyltriamine. Examples of hydrazide-based foaming agents include 4,4'-oxybis(benzenesulfonylhydrazide) (OBSH), paratoluenesulfonylhydrazide, diphenylsulfone-3,3'-disulfonylhydrazide, 2,4-toluenedisulfonylhydrazide, p,p-bis(benzenesulfonylhydrazide)ether, benzene-1,3-disulfonylhydrazide, and allylbis(sulfonylhydrazide). Examples of semicarbazide-based foaming agents include p-toluenesulfonylsemicarbazide and 4,4'-oxybis(benzenesulfonylsemicarbazide). Examples of fluorinated alkane-based foaming agents include trichloromonofluoromethane and dichloromonofluoromethane. Examples of triazole-based foaming agents include 5-morpholyl-1,2,3,4-thiatriazole. The organic foaming agent may be a thermally expandable microparticle in which a thermally expandable substance is encapsulated in a microcapsule. Such a thermally expandable microparticle is, for example, a commercially available product such as Microsphere (product name, manufactured by Matsumoto Yushi-Seiyaku Co., Ltd.).

Examples of the inorganic foaming agent include a hydrogen carbonate, a carbonate, a nitrite, a borohydride, an inorganic azide, and other known inorganic foaming agents. Examples of hydrogen carbonates include sodium hydrogen carbonate and ammonium hydrogen carbonate. Examples of carbonates include sodium carbonate and ammonium carbonate. Examples of nitrites include sodium nitrite and ammonium nitrite. Examples of borohydrides include sodium borohydride. These foaming agents may be used alone, or a combination of two or more of these foaming agents may be used.

The mixing amount of the foaming agent is, for example, 0.1 parts by mass or more, desirably 1 part by mass or more, and more desirably 10 parts by mass or more, relative to 100 parts by mass of the rubber. The mixing amount of the foaming agent is, for example, 50 parts by mass or less, and desirably 30 parts by mass or less.

Examples of the cross-linking agent include sulfur (S8) and a sulfur compound, such as 4,4'-dithiodimorpholine, selenium, magnesium oxide, lead monoxide, a quinoid compound, such as p-quinone dioxime, p,p'-dibenzoylquinone dioxime, or poly-p-dinitrosobenzene, a polyamine, a nitroso compound, such as p-dinitrosobenzene, an organic peroxide, a resin, and an ammonium salt, such as ammonium benzoate. Examples of organic peroxides include dicumyl peroxide, dimethyldi(t-butylperoxy)hexane, 1,1-di(t-butylperoxy)cyclohexane, and α,α'-di(t-butylperoxy)diisopropylbenzene. Examples of resins include alkylphenol-formaldehyde resins and melamine-formaldehyde condensates. These cross-linking agents may be used alone, or a combination of two or more of these cross-linking agents may be used.

The cross-linking agent is desirably sulfur (S8) and a sulfur compound, a quinoid compound, or an organic peroxide. Sulfur (S8) and sulfur compounds are advantageous in terms of achieving excellent mechanical strength and excellent foaming properties. Quinoid compounds are advantageous in terms of reducing the sulfur atom content, reducing corrosive properties, and achieving excellent foaming properties. Organic peroxides are advantageous in terms of improving adhesion, conformability to steps, etc., with respect to the object for achieving a sealing structure.

The mixing proportion of the cross-linking agent is, for example, 0.05 parts by mass or more, desirably 0.5 parts by mass or more, and more desirably 1 part by mass or more, relative to 100 parts by mass of the rubber. The mixing proportion of the cross-linking agent is, for example, 30 parts by mass or less, desirably 20 parts by mass or less, and more desirably 10 parts by mass or less, relative to 100 parts by mass of the rubber.

The cross-linking agent may be a combination of a quinoid compound and an organic peroxide. In this case, sufficient cross-linking on the surface of the foam 20 is likely to occur. In the case where the combination of a quinoid compound and an organic peroxide is used, the mixing proportion of the organic peroxide is, for example, 1 part by mass or more, and more desirably 10 parts by mass or more, relative to 100 parts by mass of the quinoid compound. The mixing proportion is, for example, 100 parts by mass or less, and desirably 50 parts by mass or less, relative to 100 parts by mass of the quinoid compound.

The rubber composition desirably contains a foaming aid and a cross-linking aid. Examples of the foaming aid include a urea-based foaming aid, a salicylic acid-based foaming aid, a benzoic acid-based foaming aid, and a metal oxide, such as zinc oxide. Preferred examples of the foaming aid include a urea-based foaming aid and a metal oxide. These foaming aids may be used alone, or a combination of two or more of these foaming aids may be used.

The mixing proportion of the foaming aid is, for example, 0.5 parts by mass or more, and desirably 1 part by mass or more, relative to 100 parts by mass of the rubber. The mixing proportion is, for example, 20 parts by mass or less, and more desirably 10 parts by mass or less, relative to 100 parts by mass of the rubber.

Examples of the cross-linking aid include a thiazole, a thiourea, a dithiocarbamate, a guanidine, a sulfenamide, a thiuram, a xanthate, an aldehyde ammonia, and an aldehyde amine. Among these, a thiazole, a thiourea, a dithiocarbamate, or a thiuram is desirably used as the cross-linking aid. Examples of thiazoles include dibenzothiazyl disulfide and 2-mercaptobenzothiazole. Examples of thioureas include diethylthiourea, trimethylthiourea, and dibutylthiourea. Examples of dithiocarbamates include sodium dimethyldithiocarbamate, sodium diethyldithiocarbamate, zinc dimethyldithiocarbamate, zinc diethyldithiocarbamate, and zinc dibenzyl dithiocarbamate. Examples of guanidines include diphenylguanidine and di-o-tolylguanidine. Examples of sulfenamides include benzothiazyl-2-diethylsulfenamide and N-cyclohexyl-2-benzothiazylsulfenamide. Examples of thiurams include tetramethylthiuram monosulfide, tetramethylthiuram disulfide, and tetrabenzylthiuram disulfide. Examples of xanthates include sodium isopropyl xanthate and zinc isopropyl xanthate. Examples of aldehyde ammonias include acetaldehyde ammonia and hexamethylenetetetramine. Examples of aldehyde amines include n-butyraldehyde aniline and butyraldehyde monobutylamine.

The cross-linking aid may be an alcohol. Examples of alcohols include monohydric alcohols, such as ethanol, dihydric alcohols, such as ethylene glycol, trihydric alcohols, such as glycerin, and polyols (polyoxyethylene glycols), such as polyethylene glycol and polypropylene glycol. Desirably, a polyol is used as the alcohol. In this case, the number average molecular weight of the polyol is, for example, 200 or more, and desirably 300 or more. The number average molecular weight of the polyol is, for example, 10000 or less, and desirably 5000 or less.

These cross-linking aids may be used alone, or a combination of two or more of these cross-linking aids may be used.

In the case where sulfur and a sulfur compound are used as the cross-linking agent, a thiazole, a thiourea, a dithiocarbamate, or a thiuram is desirably used as the cross-linking aid in terms of ensuring good foam shape and good flexibility of the foam 20.

In the case where a quinoid compound is used as the cross-linking agent, an alcohol is desirably used as the cross-linking aid and a polyol is more desirably used as the cross-linking aid, in terms of reducing corrosive properties. In particular, in the case where a derivative of p-quinone dioxime is used as the quinoid compound, the use of polyethylene glycol is advantageous. In the case where polyethylene glycol is used as the polyol, the rubber composition can be cross-linked well, making excellent foaming properties likely to be ensured.

The mixing proportion of the cross-linking aid is, for example, 0.01 parts by mass or more, desirably 0.02 parts by mass or more, and more desirably 0.06 parts by mass or more, relative to 100 parts by mass of the rubber. The mixing amount is, for example, 20 parts by mass or less, desirably 10 parts by mass or less, and more desirably 5 parts by mass or less, relative to 100 parts by mass of the rubber.

The rubber composition may contain an additive such as a lubricant (processing aid), a pigment, a filler, a flame retardant, or a softener, as needed.

Examples of the lubricant include stearic acids, esters thereof, stearate compounds, such as zinc stearate, and paraffin. These lubricants may be used alone, or a combination of two or more of these lubricants may be used. The mixing proportion of the lubricant is, for example, 0.1 parts by mass or more, and desirably 1 part by mass or more, relative to 100 parts by mass of the rubber. The mixing proportion is, for example, 20 parts by mass or less, and more desirably 10 parts by mass or less, relative to 100 parts by mass of the rubber.

An example of the pigment is carbon black. Pigments may be used alone, or a combination of two or more pigments may be used. The mixing proportion of the pigment is, for example, 1 part by mass or more, and desirably 2 parts by mass or more, relative to 100 parts by mass of the rubber. The mixing proportion is, for example, 50 parts by mass or less, and desirably 30 parts by mass or less, relative to 100 parts by mass of the rubber.

The filler may be an inorganic filler, an organic filler, or any other known filler. Examples of the inorganic filler include calcium carbonate, magnesium carbonate, silicic acids and salts thereof, clay, talc, mica powder, bentonite, silica, alumina, aluminum silicate, and aluminum powder. An example of the organic filler is cork. These fillers may be used alone, or a combination of two or more of these fillers may be used. The mixing proportion of the filler is, for example, 10 parts by mass or more, desirably 30 parts by mass or more, and more desirably 50 parts by mass or more, relative to 100 parts by mass of the rubber. The mixing proportion is, for example, 300 parts by mass or less, and desirably 200 parts by mass or less, relative to 100 parts by mass of the rubber.

Examples of the flame retardant include hydroxides, such as calcium hydroxide, magnesium hydroxide, and aluminum hydroxide. These flame retardants may be used alone, or a combination of two or more of these flame retardants may be used. The mixing proportion of the flame retardant is, for example, 5 parts by mass or more, desirably 10 parts by mass or more, and more desirably 15 parts by mass or more, relative to 100 parts by mass of the rubber. The mixing proportion is, for example, 200 parts by mass or less, desirably 150 parts by mass or less, and more desirably 100 parts by mass or less, relative to 100 parts by mass of the rubber.

Examples of the softener include petroleum-based oils, asphalt, low-molecular-weight polymers, organic acid esters, and tackifiers. Examples of petroleum-based oils include paraffinic process oils, such as paraffin oil, naphthenic process oils, drying oils or animal and vegetable oils, and aromatic process oils. An example of drying oils or animal and vegetable oils is flaxseed oil. Examples of organic acid esters include phthalates, such as di-2-ethylhexyl phthalate (DOP) and dibutyl phthalate (DBP), phosphate esters, higher fatty acid esters, and alkyl sulfonate esters. The softener used is desirably a petroleum-based oil or asphalt, more desirably a paraffinic process oil. These softeners may be used alone, or a combination of two or more of these softeners may be used. The mixing proportion of the softener is, for example, 5 parts by mass or more, and desirably 10 parts by mass or more, relative to 100 parts by mass of the rubber. The mixing proportion is, for example, 300 parts by mass or less, and more desirably 200 parts by mass or less, relative to 100 parts by mass of the rubber.

The rubber composition may contain a known additive such as a plasticizer, an anti-aging agent, an antioxidant, a colorant, an anti-fungal agent, or a non-rubber polymer, depending on its purpose and application.

As shown in FIG. 1, the sealing member 1a may include at least two layers. In this case, F1, F2, and the tear strength T can be easily adjusted such that the requirements F1 ≥ F2, T > F2, F1 ≥ 0.3 N/20 mm, and F2 ≥ 0.3 N/20 mm are satisfied. The sealing member 1a may be composed of only one layer.

As shown in FIG. 1, the sealing member 1a may include, for example, an adhesive layer 10 forming at least one face selected from the group consisting of the first face 11 and the second face 12. In this case, the peel adhesions F1 and F2 can be easily adjusted to desired ranges. In the sealing structure 1a, for example, the first face 11 is formed from a first adhesive layer 10a and the second face 12 is formed from a second adhesive layer 10b. In other words, the sealing member 1a includes a pair of adhesive layers 10 forming both the first face 11 and the second face 12. The sealing member 1a may be modified so that a layer other than the adhesive layer 10 forms the first face 11. For example, the sealing member 1a may be modified so that the foam 20 forms the first face 11. Alternatively, the sealing member 1a may be modified so that a layer other than the adhesive layer 10 forms the second face 12. For example, the sealing member 1a may be modified so that the foam 20 forms the second face 12.

The adhesive layer 10 is not limited to a particular embodiment as long as the requirements F1 ≥ F2, T > F2, F1 ≥ 0.3 N/20 mm, and F2 ≥ 0.3 N/20 mm are satisfied. As shown in FIG. 1, the adhesive layer 10 contains, for example, a filler 10f. For example, the second adhesive layer 10b contains the filler 10f. In this case, the filler 10f can be present in a portion of the second face 12. Consequently, the tack value V_{Tack} of the second face 12 can be easily adjusted to a desired range. The first adhesive layer 10a may contain the filler.

The material of the filler 10f is not limited to a particular filler. The filler 10f contains, for example, an inorganic substance. Examples of the inorganic substance include calcium carbonate, magnesium carbonate, clay, talc, mica, bentonite, silica, alumina, aluminum silicate, and aluminum.

The adhesive layer 10 is formed, for example, as a pressure-sensitive adhesive layer. The adhesive layer 10 contains, for example, a matrix 10m and the filler 10f. The filler 10f is dispersed in the matrix 10m. The matrix 10m contains, for example, a rubber-based polymer. The rubber-based polymer is, for example, a synthetic rubber, such as a thermoplastic elastomer or a thermosetting elastomer. The adhesive layer 10 does not need to contain the filler 10f.

Examples of thermoplastic elastomers include olefin-based elastomers, styrene-based elastomers, butyl-based elastomers, and vinyl chloride-based elastomers. Examples of olefin-based elastomers include ethylene-propylene rubber (EPM) and ethylene-propylene-diene rubber (EPDM). Examples of styrene-based elastomers include styrene-butadiene rubber (SBR), styrene-butadiene-styrene rubber (SBS), styrene-isoprene styrene rubber (SIS), styrene-ethylene-butadiene rubber, styrene-ethylene-butylene-styrene rubber (SEBS), styrene-isobutylene-styrene block rubber (SIBS), and styrene-isoprene-propylene-styrene rubber. Examples of butyl-based elastomers include butyl rubber, polyisobutylene rubber, polybutene, polyisoprene rubber, and nitrile butadiene rubber (NBR). Examples of vinyl chloride-based elastomers include chloroprene rubber and chlorosulfonated polyethylene rubber.

Examples of thermosetting elastomers include silicone rubber, fluorine rubber, acrylic rubber, and polyamide rubber.

The rubber-based polymer is desirably a thermoplastic elastomer, and more desirably a styrene-based elastomer or a butyl-based elastomer.

The weight average molecular weight of the rubber-based polymer is, for example, 30,000 or more, desirably 50,000 or more, and more desirably 100,000 or more. The weight average molecular weight of the rubber-based polymer is, for example, 5,000,000 or less, desirably 3,000,000 or less, and more desirably 1,000,000 or less. In this case, the face formed from the adhesive layer 10 is likely to have a desired adhesion. The weight average molecular weight is measured by gel permeation chromatography, expressed in terms of polystyrene equivalents.

The content of the filler 10f in the adhesive layer 10 is not limited to a particular value. For example, in the adhesive layer 10, the content of the filler 10f is, for example, 5 parts by mass or more, desirably 10 parts by mass or more, and more desirably 20 parts by mass or more, relative to 100 parts by mass of the rubber-based polymer in the matrix 10m. The content of the filler 10f is, for example, 300 parts by mass or less, desirably 250 parts by mass or less, and more desirably 200 parts by mass or less, relative to 100 parts by mass of the rubber-based polymer in the matrix 10m.

Desirably, the matrix 10m further contains a tackifier. In this case, for example, the face formed from the adhesive layer 10 is likely to have a desired adhesion. For example, when a given period of time elapses after the sealing structure 2 is obtained using the sealing member 1a, the face formed from the adhesive layer 10 is likely to have high adhesion.

The tackifier is not limited to a particular substance. The tackifier is, for example, a given resin. Examples of the resin include a rosin-based tackifier resin, a terpene-based tackifier resin, a hydrocarbon-based tackifier resin, a phenol-based tackifier resin, a ketone-based tackifier resin, a polyamide-based tackifier resin, an epoxy-based tackifier resin, and an elastomer-based tackifier resin. Examples of rosin-based tackifier resins include unmodified rosin, modified rosin, rosin-phenol-based resins, and rosin ester-based resins. Examples of terpene-based tackifier resins include terpene-based resins, terpene-phenol-based resins, styrene-modified terpene-based resins, aromatic modified terpene-based resins, and hydrogenated terpene-based resins. Examples of hydrocarbon-based tackifier resins include aliphatic hydrocarbon resins, aliphatic cyclic hydrocarbon resins, aromatic hydrocarbon resins, aliphatic and aromatic petroleum resins, aliphatic and alicyclic petroleum resins, hydrogenated hydrocarbon resins, coumarone-based resins, and coumarone-indene-based resins. Examples of aromatic hydrocarbon resins include styrene-based resins and xylene-based resins. Examples of phenol-based tackifier resins include alkylphenol-based resins, xylene formaldehyde-based resins, resol, and novolac. The tackifier is desirably a cycloaliphatic hydrocarbon resin or an aromatic hydrocarbon resin.

The content of the tackifier in the adhesive layer 10 is not limited to a particular value. For example, in the adhesive layer 10, the content of the tackifier is, for example, 5 parts by mass or more, desirably 10 parts by mass or more, and more desirably 20 parts by mass or more, relative to 100 parts by mass of the rubber-based polymer in the matrix 10m. The content of the tackifier is, for example, 200 parts by mass or less, desirably 140 parts by mass or less, and more desirably 120 parts by mass or less, relative to 100 parts by mass of the rubber-based polymer in the matrix 10m.

The adhesive layer 10 may be composed of an acrylic pressure-sensitive adhesive layer. The acrylic pressure-sensitive adhesive layer can be, for example, a known acrylic pressure-sensitive adhesive layer.

### Examples

The present invention will be described below in more detail with reference to examples. The present invention is not limited to the following examples.

### <Example 1>

An SBS resin, TUFPRENE A, manufactured by Asahi Kasei Corporation, a tackifier, ARKON M-115, manufactured by ARAKAWA CHEMICAL INDUSTRIES, LTD., and heavy calcium carbonate, manufactured by MARUO CALCIUM CO., LTD., serving as a filler, were kneaded in the respective mixing proportions of 100 parts by mass, 25 parts by mass, and 35 parts by mass to obtain a mixture. This mixture was heat-pressed under the conditions of 150°C and 4 MPa to obtain a sheet according to Example 1 having a thickness of 200 µm.

A foam, No. 6800, manufactured by Nitto Denko Corporation, was disposed between the two sheets according to Example 1 to obtain a stack. This foam was an EPDM foam having a closed-cell structure and had a thickness of 10 mm. This stack was heated in an oven set at 140°C under a pressure of 2 kPa to bond the two sheets according to Example 1 to the foam. Thus, a sealing member according to Example 1 was obtained.

### <Examples 2 to 5>

The mixing proportions of the SBS resin, the tackifier, and the heavy calcium carbonate were changed to those shown in Table 1A. Except for this, the same procedure was followed as in Example 1 to obtain sheets according to Examples 2 to 5. The sheets according to Examples 2 to 5 were used instead of the sheet according to Example 1. Except for this, the same procedure was followed as in Example 1 to obtain sealing members according to Examples 2 to 5.

### <Example 6>

An SBS resin (1), Calprene 501, manufactured by Dynasol Group, an SBS resin (2), Solprene 4302, manufactured by Dynasol Group, a tackifier, Piccotac 7590 N, manufactured by Eastman Chemical Company, heavy calcium carbonate, manufactured by MARUO CALCIUM CO., LTD., and bentonite, Claytone HT, manufactured by BYK-Chemie GmbH, were mixed in the respective mixing proportions of 50 parts by mass, 50 parts by mass, 100 parts by mass, 100 parts by mass, and 10 parts by mass to obtain a mixture. The heavy calcium carbonate and the bentonite served as fillers. This mixture was heat-pressed under the conditions of 150°C and 4 MPa to obtain a sheet according to Example 6 having a thickness of 200 µm. The sheet according to Example 6 was used instead of the sheet according to Example 1. Except for this, the same procedure was followed as in Example 1 to obtain a sealing member according to Example 6.

### <Example 7>

The heavy calcium carbonate was not added and the mixing proportions of the SBS resin and the tackifier were changed to those shown in Table 1A. Except for this, the same procedure was followed as in Example 1 to obtain a sheet according to Example 7. The sheet according to Example 7 was used instead of the sheet according to Example 1. Except for this, the same procedure was followed as in Example 1 to obtain a sealing member according to Example 7.

### <Example 8>

An EPDM foam was disposed between the sheet according to Example 2 and a substrate-less double-sided adhesive tape α consisting of an acrylic pressure-sensitive adhesive (PSA) layer. Except for this, the same procedure was followed as in Example 2 to obtain a sealing member according to Example 8. The double-sided adhesive tape α had a thickness of 70 µm.

### <Example 9>

The EPDM foam used was a foam, EE-1000, manufactured by Nitto Denko Corporation, instead of No. 6800. Except for this, the same procedure was followed as in Example 8 to obtain a sealing member according to Example 9. This foam had a semi-open/semi-closed-cell structure and had a thickness of 10 mm.

### <Example 10>

An SBS resin, D1155, manufactured by KRATON CORPORATION, and a tackifier, ARKON M-115, manufactured by ARAKAWA CHEMICAL INDUSTRIES, LTD., were kneaded in the respective mixing proportions of 100 parts by mass and 40 parts by mass to obtain a mixture. This mixture was heat-pressed under the conditions of 150°C and 4 MPa to obtain a sheet according to Example 10 having a thickness of 200 µm. The sheet according to Example 10 was used instead of the sheet according to Example 1. Except for this, the same procedure was followed as in Example 1 to obtain a sealing member according to Example 10.

### <Example 11>

The respective mixing proportions of the SBS resin and the tackifier were changed to 100 parts by mass and 60 parts by mass. Except for this, the same procedure was followed as in Example 10 to obtain a sheet according to Example 11 having a thickness of 200 µm. The sheet according to Example 11 was used instead of the sheet according to Example 1. Except for this, the same procedure was followed as in Example 1 to obtain a sealing member according to Example 11.

### <Example 12>

The respective mixing proportions of the SBS resin and the tackifier were changed to 100 parts by mass and 35 parts by mass. Except for this, the same procedure was followed as in Example 10 to obtain a sheet according to Example 12 having a thickness of 200 µm.

A foam, No. 6800, manufactured by Nitto Denko Corporation, was disposed between the sheet according to Example 12 and the substrate-less double-sided adhesive tape α consisting of an acrylic pressure-sensitive adhesive layer to obtain a stack. This stack was heated in an oven set at 140°C under a pressure of 2 kPa to bond the sheet according to Example 12 and the double-sided adhesive tape α to the foam. Thus, a sealing member according to Example 12 was obtained.

### <Example 13>

A foam, No. 6800, manufactured by Nitto Denko Corporation, was disposed between the sheet according to Example 12 and a double-sided adhesive tape β containing an acrylic pressure-sensitive adhesive layer to obtain a stack. This stack was heated in an oven set at 140°C under a pressure of 2 kPa to bond the sheet according to Example 12 and the double-sided adhesive tape β to the foam. Thus, a sealing member according to Example 13 was obtained. The double-sided adhesive tape β had a thickness of 200 µm.

### <Example 14>

An SEBS resin, G1657, manufactured by KRATON CORPORATION, and a tackifier, ARKON P-115, manufactured by ARAKAWA CHEMICAL INDUSTRIES, LTD., were kneaded in the respective mixing proportions of 100 parts by mass and 35 parts by mass to obtain a mixture. This mixture was heat-pressed under the conditions of 150°C and 4 MPa to obtain a sheet according to Example 14 having a thickness of 200 µm. The sheet according to Example 14 was used instead of the sheet according to Example 1. Except for this, the same procedure was followed as in Example 1 to obtain a sealing member according to Example 14.

### <Example 15>

The respective mixing proportions of the SEBS resin and the tackifier were changed to 100 parts by mass and 45 parts by mass. Except for this, the same procedure was followed as in Example 14 to obtain a sheet according to Example 15 having a thickness of 200 µm. The sheet according to Example 15 was used instead of the sheet according to Example 1. Except for this, the same procedure was followed as in Example 1 to obtain a sealing member according to Example 15.

### <Example 16>

The respective mixing proportions of the SEBS resin and the tackifier were changed to 100 parts by mass and 60 parts by mass. Except for this, the same procedure was followed as in Example 14 to obtain a sheet according to Example 16 having a thickness of 200 µm. The sheet according to Example 16 was used instead of the sheet according to Example 1. Except for this, the same procedure was followed as in Example 1 to obtain a sealing member according to Example 16.

### <Example 17>

The respective mixing proportions of the SEBS resin and the tackifier were changed to 100 parts by mass and 80 parts by mass. Except for this, the same procedure was followed as in Example 14 to obtain a sheet according to Example 17 having a thickness of 200 µm. The sheet according to Example 17 was used instead of the sheet according to Example 1. Except for this, the same procedure was followed as in Example 1 to obtain a sealing member according to Example 17.

### <Example 18>

A foam, No. 6800, manufactured by Nitto Denko Corporation, was disposed between the sheet according to Example 15 and the substrate-less double-sided adhesive tape α consisting of an acrylic pressure-sensitive adhesive layer to obtain a stack. This stack was heated in an oven set at 140°C under a pressure of 2 kPa to bond the sheet according to Example 15 and the double-sided adhesive tape α to the foam. Thus, a sealing member according to Example 18 was obtained.

### <Example 19>

A foam, No. 6800, manufactured by Nitto Denko Corporation, was disposed between the sheet according to Example 15 and the double-sided adhesive tape β containing an acrylic pressure-sensitive adhesive layer to obtain a stack. This stack was heated in an oven set at 140°C under a pressure of 2 kPa to bond the sheet according to Example 15 and the double-sided adhesive tape β to the foam. Thus, a sealing member according to Example 19 was obtained.

### <Comparative Example 1>

An EPDM foam was disposed between the sheet according to Example 1 and the double-sided adhesive tape α. Except for this, the same procedure was followed as in Example 1 to obtain a sealing member according to Comparative Example 1. The double-sided adhesive tape had a thickness of 70 µm.

### <Comparative Example 2>

A foam EE-1000 and the double-sided adhesive tape α were stacked to obtain a sealing member according to Comparative Example 2, with one principal surface of the foam EE-1000 exposed.

### <Comparative Example 3>

An EPDM foam, EC-100, manufactured by Nitto Denko Corporation, was disposed between two pieces of the double-sided adhesive tape α, and the two pieces of the double-sided adhesive tape α were adhered to both principal surfaces of the foam to obtain a sealing member according to Comparative Example 3. This foam had a semi-open/semi-closed-cell structure and had a thickness of 10 mm.

### <Comparative Example 4>

Neither the tackifier nor the filler was added, and only the SBS resin was used. Except for this, the same procedure was followed as in Example 1 to obtain a sheet according to Comparative Example 4. The sheet according to Comparative Example 4 was used instead of the sheet according to Example 1. Except for this, the same procedure was followed as in Example 1 to obtain a sealing member according to Comparative Example 4.

### <90° peel adhesion>

The initial 90° peel adhesions F1 and F2 of both principal surfaces of the sealing member according to each of the examples and comparative examples were measured in accordance with JIS Z 0237:2022. The test panel for adhering the sealing member was a SUS304 steel plate having a thickness of 1.5 mm. A sample prepared from the sealing member for this measurement had a length of 100 mm and a width of 20 mm in plan view. In adhering the sealing member to the test panel, a roller having a weight of 2 kg was reciprocated once along the longitudinal direction of the sample. In this measurement, the sealing member was peeled off at the time when 30 minutes had elapsed after the adhering of the sealing member to the test panel. The test speed in this measurement was set to 300 mm/min. The results are shown in Tables 1A, 1B, and 2.

The sealing member was peeled off at the time when one day had elapsed after the adhering of the sealing member to the test panel. Except for this, the same measurements for the 90° peel adhesions F1 and F2 were performed to measure the 90° peel adhesions F1_{1day} and F2_{1day} as of one day after the adhering. The results are shown in Tables 1A, 1B, and 2.

### <Tear strength of foam>

An angle test piece without a nick was prepared from each of the EPDM foams No. 6800, EE-1000, and EC-100 in accordance with JIS K 6252-1:2015. The test piece had a thickness of 10 mm. In accordance with JIS K 6252-1:2015, this test piece was torn at a test speed of 500 mm/min and the tear strength T of each EPDM foam was measured. The tear strength T was determined by dividing the maximum load [N] measured during the tearing of the test piece by the thickness of the test piece and converting the resulting value into the unit of [N/20 mm]. The results are shown in Tables 1A, 1B, and 2.

### <Tack value>

One principal surface of the sealing member according to each of the examples and comparative examples was defined as the first face, and the other principal surface was defined as the second face. The second face of each sealing member was subjected to a probe tack test in accordance with a portion of ASTM D2979:2016. In this test, a testing machine, Autograph AG-I, manufactured by Shimadzu Corporation, was used. Furthermore, a cylindrical rod made of aluminum was used as the probe. This probe had a 5 mm diameter circular end face. Each sealing member was cut into a square with one side measuring 30 mm in length in plan view to obtain a specimen for the probe tack test. Each specimen was placed in the testing machine with the second face of the sealing member facing the probe, and the probe, which had a 5 mm diameter circular end face, was brought close to the specimen at a speed of 10 mm/min until a force of 0.25 N was applied. Subsequently, the position of the probe was fixed for 1 second, and then the probe was separated from the second face of the specimen at a speed of 100 mm/min. The maximum value of the force acting on the probe while the probe was being separated from the second face of the specimen was divided by the area of the end face of the probe, thus determining the tack value V_{Tack}. The results are shown in Tables 1A, 1B, and 2.

From the sealing member according to each of the examples and comparative examples, a portion having a thickness of 200 µm, including the second face, was cut out in the thickness direction. In accordance with JIS K6251:2017, the portion was punched into the shape of No. 1 dumbbell to prepare a test piece for measuring the modulus of elasticity in tension. This test piece was subjected to a tensile test in accordance with JIS K6251:2017 under the conditions of a gauge length of 40 mm and a test speed of 1000 mm/min. The strain range of 2 to 10% of the stress-strain curve obtained from this test was linearly approximated by the least-squares method, and the slope of the approximated line was determined as the modulus of elasticity in tension. The results are shown in Tables 1A, 1B, and 2.

### <Evaluation of adhering performance using roller>

The sealing member according to each of the examples and comparative examples was cut out to have a width of 10 mm and a length of 150 mm to prepare a specimen for evaluation of adhering performance using a roller. The specimen was placed on an SUS304 steel plate having a thickness of 1.5 mm so that the first face of the sealing member was in contact with the surface of the SUS304 steel plate. A rubber hand roller was rolled on the second face of the sealing member to adhere the specimen to the SUS304 steel plate. The roller portion of the hand roller had a diameter of 24 mm and a width of 30 mm. The rotational speed (circumferential speed) of the roller portion was adjusted to 200 mm/min. The adhering performance of each sealing member was evaluated according to the following criteria. The results are shown in Tables 1A, 1B, and 2.
AA: The sealing member did not wind around the roller and was able to be adhered easily.
A: The sealing member did not wind around the roller and was able to be adhered.
B: The sealing member did not wind around the roller and was able to be adhered; however, it was difficult to peel off the sealing member from the roller.
C: The sealing member wound around the roller and was not able to be adhered.

### <Evaluation of watertight performance>

The sealing member according to each of the examples and comparative examples was punched into the shape of an annular ring having an inner diameter of 50 mm and an outer diameter of 70 mm to prepare a test piece for IPX7 testing. The test piece was placed between two acrylic sheets, and spacers were arranged around the test piece between the two acrylic sheets to fix the test piece in a state where a 50% compressive strain was induced in the thickness direction of the acrylic sheets. The acrylic sheets were Acrylite EX, manufactured by Mitsubishi Chemical Corporation, and had a thickness of 10 mm. Thus, a sample for IPX7 testing was prepared. This sample was submerged in a water tank containing water to a height of 1 m. When a given time elapsed, the sample was taken out. The watertight performance of each sample was evaluated according to the following criteria. The results are shown in Tables 1A, 1B, and 2.
A: No water leakage inside the annular-ring-shaped test piece was observed 24 hours after the submergence of the sample in the water tank.
B: Water leakage inside the annular-ring-shaped test piece was observed 24 hours after the submergence of the sample in the water tank; however, no water leakage inside the annular-ring-shaped test piece was observed 30 minutes after the submergence of the sample in the water tank.
C: Water leakage inside the annular-ring-shaped test piece was observed 30 minutes after the submergence of the sample in the water tank.

The sealing member according to each of the examples and comparative examples was punched into the shape of an annular ring having an inner diameter of 50 mm and an outer diameter of 70 mm to prepare a test piece for IPX9K testing. The test piece was placed between two polycarbonate sheets, and spacers were arranged around the test piece between the two polycarbonate sheets to fix the test piece in a state where a 50% compressive strain was induced in the thickness direction of the acrylic sheets. The polycarbonate sheets were PC1600, manufactured by C.I. TAKIRON Corporation, and had a thickness of 10 mm. Thus, a sample for IPX9K testing was prepared. In a state where this sample was positioned so that the two polycarbonate sheets were horizontal, the sample was subjected to water jetting for a total of 2 minutes under the conditions of a temperature of 80°C, a water pressure of 8 MPa, and a water flow rate of 14 L/min from directions making angles of 0°, 30°, 60°, and 90° relative to the horizontal plane for 30 seconds each. The distance between the jet port of the nozzle though which the water was jetted and the outer circumferential edge of the test piece of the sample was adjusted to 10 cm. At the angle of 0°, the jet port of the nozzle was positioned almost at the same height as the test piece. At the angles of 30°, 60°, and 90°, the jet port of the nozzle was positioned higher than the sample. The watertight performance of each sample was evaluated according to the following criteria. The results are shown in Tables 1A and 2.
A: No water leakage inside the annular-ring-shaped test piece was observed.
C: Water leakage inside the annular-ring-shaped test piece was observed.

As shown in Tables 1A, 1B, and 2, the sealing members according to the examples exhibited good adhering performance using a roller, and also exhibited good results in the evaluation of watertight performance. In contrast, the sealing members according to Comparative Examples 1 and 3 exhibited difficulty in adhering using a roller. Although the sealing members according to Comparative Examples 2 and 4 were able to be adhered using a roller, their watertight performance was not considered to be high. It is understood that satisfying the requirements F1 ≥ F2, T > F2, F1 ≥ 0.3 N/20 mm, and F2 ≥ 0.3 N/20 mm in a sealing member is advantageous in terms of adhering a sealing member while pressing the sealing member using a roller and in terms of watertight performance.

A first aspect of the present invention provides a sealing member including:
a first face; and
a second face facing in a direction opposite to a direction in which the first face faces, wherein
requirements F1 ≥ F2, T > F2, F1 ≥ 0.3 N/20 mm, and F2 ≥ 0.3 N/20 mm are satisfied,
in the requirements, F1 is a 90° peel adhesion [N/20 mm] as measured in accordance with Japanese Industrial Standards (JIS) Z 0237:2022 by peeling off the first face, and F2 is a 90° peel adhesion [N/20 mm] as measured in accordance with JIS Z 0237:2022 by peeling off the second face, and
in the requirements, T is a tear strength [N/20 mm] as measured in accordance with JIS K 6252-1:2015 by using an angle test piece without a nick, the test piece being formed from a portion of the sealing member away from both the first face and the second face.

A second aspect of the present invention provides the sealing member according to the first aspect, wherein
the second face has a tack value of 20 N/cm² or less, and
the tack value is determined by a method in which, when a 5 mm diameter circular end face of a probe is pressed against the second face with a force of 0.25 N for 1 second and then is separated from the second face at a speed of 100 mm/min, a maximum value of a force acting on the probe while the probe is being separated from the second face is divided by an area of the end face.

A third aspect of the present invention provides the sealing member according to the first or second aspect, including a foam.

A fourth aspect of the present invention provides the sealing member according to the third aspect, wherein
the foam has a closed-cell structure.

A fifth aspect of the present invention provides the sealing member according to any one of the first to fourth aspects, including at least two layers.

A sixth aspect of the present invention provides the sealing member according to any one of the first to fifth aspects, including an adhesive layer forming at least one face selected from the group consisting of the first face and the second face.

A seventh aspect of the present invention provides the sealing member according to the sixth aspect, wherein
the adhesive layer includes a filler.

An eighth aspect of the present invention provides the sealing member according to any one of the first to seventh aspects, wherein
either a layer including the second face or a portion having a thickness of 200 µm from the second face has a modulus of elasticity in tension of 2 MPa or more.

A ninth aspect of the present invention provides the sealing member according to any one of the first to eighth aspects, wherein
F1_{1day} and F2_{1day} are each 5 N/20 mm or more,
F1_{1day} is a 90° peel adhesion as measured in accordance with JIS Z 0237:2022 by adhering the sealing member to a test panel with the first face in contact with the test panel and peeling off the sealing member one day after the adhering, and
F2_{1day} is a 90° peel adhesion as measured in accordance with JIS Z 0237:2022 by adhering the sealing member to a test panel with the second face in contact with the test panel and peeling off the sealing member one day after the adhering.

**[Table 1A]**

| | | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|
| Configuration of portion forming second face | SBS [parts by mass] | 100 | 100 | 100 | 100 | 100 | 100 | 100 | 100 | 100 |
| | Tackifier [parts by mass] | 25 | 45 | 65 | 85 | 65 | 100 | 100 | 45 | 45 |
| | Filler [parts by mass] | 35 | 35 | 35 | 35 | 160 | 110 | 0 | 35 | 35 |
| Foam | | No. 6800 EPDM Closed-cell | No. 6800 EPDM Closed-cell | No. 6800 EPDM Closed-cell | No. 6800 EPDM Closed-cell | No. 6800 EPDM Closed-cell | No. 6800 EPDM Closed-cell | No. 6800 EPDM Closed-cell | No. 6800 EPDM Closed-cell | EE-1000 EPDM Semi-open /semi-closed-cell |
| Configuration of portion forming first face | SBS [parts by mass] | 100 | 100 | 100 | 100 | 100 | 100 | 100 | Double-sided adhesive tape consisting of acrylic PSA layer | Double-sided adhesive tape consisting of acrylic PSA layer |
| | Tackifier [parts by mass] | 25 | 45 | 65 | 85 | 65 | 100 | 100 | | |
| | Filler [parts by mass] | 35 | 35 | 35 | 35 | 160 | 110 | 0 | | |
| 90° peel adhesion F1 [N/20 mm] | | 1.3 | 6.5 | 29.1 | 28.5 | 6.3 | 9.3 | 48 | 11.5 | 11.5 |
| 90° peel adhesion F2 [N/20 mm] | | 1.3 | 6.5 | 29.1 | 28.5 | 6.3 | 9.3 | 48 | 6.5 | 6.5 |
| 90° peel adhesion F1_{1day} [N/20 mm] | | 7.8 | 16.9 | 47.0 | 50.0 | 17.0 | 17.9 | 90.3 | 13.7 | 13.7 |
| 90° peel adhesion F2_{1day} [N/20 mm] | | 7.8 | 16.9 | 47.0 | 50.0 | 17.0 | 17.9 | 90.3 | 16.9 | 16.9 |
| Foam tear strength T [N/20 mm] | | 31.4 | 31.4 | 31.4 | 31.4 | 31.4 | 31.4 | 31.4 | 31.4 | 15.0 |
| Tack value V_{tack} [N/cm²] | | 0.4 | 4.1 | 7.2 | 9.2 | 3.5 | 10 | 15 | 4.1 | 4.1 |
| Modulus of elasticity in tension of portion forming second face [MPa] | | 20.2 | 7.3 | 4.9 | 6.3 | 12.2 | 2.7 | 8.3 | 7.3 | 7.3 |
| Evaluation of adhering performance using roller | | AA | AA | AA | A | AA | B | B | AA | A |
| Evaluation of watertight performance | IPX7 | A | A | A | A | A | A | A | A | B |
| | IPX9K | A | A | A | A | A | A | A | A | C |

**[Table 1B]**

| | | Ex. 10 | Ex. 11 | Ex. 12 | Ex. 13 | Ex. 14 | Ex. 15 | Ex. 16 | Ex. 17 | Ex. 18 | Ex. 19 |
|---|---|---|---|---|---|---|---|---|---|---|---|
| Configuration of portion forming second face | SBS/SEBS [parts by mass] | 100 | 100 | 100 | 100 | 100 | 100 | 100 | 100 | 100 | 100 |
| | Tackifier [parts by mass] | 40 | 60 | 35 | 35 | 35 | 45 | 60 | 80 | 45 | 45 |
| | Filler [parts by mass] | 0 | 0 | 0 | 0 | 0 | 0 | 0 | 0 | 0 | 0 |
| Foam | | No. 6800 EPDM Closed-cell | No. 6800 EPDM Closed-cell | No. 6800 EPDM Closed-cell | No. 6800 EPDM Closed-cell | No. 6800 EPDM Closed-cell | No. 6800 EPDM Closed-cell | No. 6800 EPDM Closed-cell | No. 6800 EPDM Closed-cell | No. 6800 EPDM Closed-cell | No. 6800 EPDM Closed-cell |
| Configuration of portion forming first face | SBS/SEBS [parts by mass] | 100 | 100 | Double-sided adhesive tape consisting of acrylic PSA layer | Double-sided adhesive tape containing acrylic PSA layer | 100 | 100 | 100 | 100 | Double-sided adhesive tape consisting of acrylic PSA layer | Double-sided adhesive tape containing acrylic PSA layer |
| | Tackifier [parts by mass] | 40 | 60 | | | 35 | 45 | 60 | 80 | | |
| | Filler [parts by mass] | 0 | 0 | | | 0 | 0 | 0 | 0 | | |
| 90° peel adhesion F1 [N/20 mm] | | 15.9 | 32.5 | 14.2 | 13.7 | 3.5 | 5.6 | 13.1 | 15.4 | 11.5 | 10.8 |
| 90° peel adhesion F2 [N/20 mm] | | 15.9 | 32.5 | 13.3 | 13.3 | 3.5 | 5.6 | 13.1 | 15.4 | 5.6 | 5.6 |
| 90° peel adhesion F1_{1day} [N/20 mm] | | 23.7 | 35.3 | 13.7 | 11.7 | 5.9 | 12.2 | 16.4 | 20.4 | 13.7 | 11.7 |
| 90° peel adhesion F2_{1day} [N/20 mm] | | 23.7 | 35.3 | 19.8 | 19.8 | 5.9 | 12.2 | 16.4 | 20.4 | 12.2 | 12.2 |
| Foam tear strength T [N/20 mm] | | 27.2 | 31.4 | 31.4 | 31.4 | 31.4 | 31.4 | 31.4 | 31.4 | 31.4 | 31.4 |
| Tack value V_{tack} [N/cm²] | | 3.0 | 7.7 | 3.0 | 3.0 | 2.1 | 2.8 | 3.8 | 4.6 | 2.8 | 2.8 |
| Modulus of elasticity in tension of portion forming second face [MPa] | | 7.3 | 7.3 | 4.0 | 1.8 | 5.3 | 5.3 | 0.9 | 1.1 | 1.1 | 1.2 |
| Evaluation of adhering performance using roller | | AA | A | AA | AA | A | A | A | A | A | A |
| Evaluation of watertight performance | IPX7 | A | A | A | A | A | A | A | A | A | A |
| | IPX9K | A | A | A | A | A | A | A | A | A | A |

**[Table 2]**

| | | Comparative Ex. 1 | | Comparative Ex. 2 | Comparative Ex. 3 | Comparative Ex. 4 | |
|---|---|---|---|---|---|---|---|
| Configuration of portion forming second face | | Double-sided adhesive tape consisting of acrylic PSA layer | | EE-1000 EPDM Semi-open/ semi-closed-cell | Double-sided adhesive tape consisting of acrylic PSA layer | SBS [parts by mass] | 100 |
| | | | | | | Tackifier [parts by mass] | 0 |
| | | | | | | Filler [parts by mass] | 0 |
| Foam | | No. 6800 EPDM Closed-cell | | | EC-100 EPDM Semi-open/ semi-closed-cell | No. 6800 EPDM Closed-cell | |
| Configuration of portion forming first face | | SBS [parts by mass] | 100 | Double-sided adhesive tape consisting of acrylic PSA layer | Double-sided adhesive tape consisting of acrylic PSA layer | SBS [parts by mass] | 100 |
| | | Tackifier [parts by mass] | 25 | | | Tackifier [parts by mass] | 0 |
| | | Filler [parts by mass] | 35 | | | Filler [parts by mass] | 0 |
| 90° peel adhesion F1 [N/20 mm] | | 1.3 | | 11.5 | 11.5 | 0.2 | |
| 90° peel adhesion F2 [N/20 mm] | | 11.5 | | Less than 0.3 | 11.5 | 0.2 | |
| 90° peel adhesion F1_{1day} [N/20 mm] | | 3.2 | | 10.4 | 13.7 | 0.2 | |
| 90° peel adhesion F2_{1day} [N/20 mm] | | 13.7 | | Less than 0.3 | 13.7 | 0.2 | |
| Foam tear strength T [N/20 mm] | | 31.4 | | 15.0 | 7.7 | 31.4 | |
| Tack value V_{tack} [N/cm²] | | 28.9 | | Less than 1 | 28.9 | 0.2 | |
| Modulus of elasticity in tension of portion forming second face [MPa] | | 0.23 | | - | 0.23 | 28.2 | |
| Evaluation of adhering performance using roller | | C | | A | C | A | |
| Evaluation of watertight performance | IPX7 | A | | C | B | C | |
| | IPX9K | A | | C | C | C | |

## Claims

1. A sealing member comprising:
a first face; and
a second face facing in a direction opposite to a direction in which the first face faces, wherein
requirements F1 ≥ F2, T > F2, F1 ≥ 0.3 N/20 mm, and F2 ≥ 0.3 N/20 mm are satisfied,
in the requirements, F1 is a 90° peel adhesion [N/20 mm] as measured in accordance with Japanese Industrial Standards (JIS) Z 0237:2022 by peeling off the first face, and F2 is a 90° peel adhesion [N/20 mm] as measured in accordance with JIS Z 0237:2022 by peeling off the second face, and
in the requirements, T is a tear strength [N/20 mm] as measured in accordance with JIS K 6252-1:2015 by using an angle test piece without a nick, the test piece being formed from a portion of the sealing member away from both the first face and the second face.

2. The sealing member according to claim 1, wherein
the second face has a tack value of 20 N/cm² or less, and
the tack value is determined by a method in which, when a 5 mm diameter circular end face of a probe is pressed against the second face with a force of 0.25 N for 1 second and then is separated from the second face at a speed of 100 mm/min, a maximum value of a force acting on the probe while the probe is being separated from the second face is divided by an area of the end face.

3. The sealing member according to claim 1, comprising a foam.

4. The sealing member according to claim 3, wherein
the foam has a closed-cell structure.

5. The sealing member according to claim 1, comprising at least two layers.

6. The sealing member according to claim 1, comprising an adhesive layer forming at least one face selected from the group consisting of the first face and the second face.

7. The sealing member according to claim 6, wherein
the adhesive layer comprises a filler.

8. The sealing member according to claim 1, wherein
either a layer comprising the second face or a portion having a thickness of 200 µm from the second face has a modulus of elasticity in tension of 2 MPa or more.

9. The sealing member according to claim 1, wherein
F1_{1day} and F2_{1day} are each 5 N/20 mm or more,
F1_{1day} is a 90° peel adhesion as measured in accordance with JIS Z 0237:2022 by adhering the sealing member to a test panel with the first face in contact with the test panel and peeling off the sealing member one day after the adhering, and
F2_{1day} is a 90° peel adhesion as measured in accordance with JIS Z 0237:2022 by adhering the sealing member to a test panel with the second face in contact with the test panel and peeling off the sealing member one day after the adhering.
